# EUROPEAN PATENT APPLICATION

(11) **EP 3 232 523 A1**
(43) Date of publication of application: **18.10.2017**
(21) Application number: 16165252.4
(22) Date of filing: 14.04.2016
(51) Int. Cl.: H02B 1/30

(54) **SWITCHGEAR CONNECTING ADAPTER**

(71) Applicant: ABB Schweiz AG, 5400 Baden (CH)
(72) Inventor: Deck, Bernhard, D-79809 Weilheim (DE); Gatti, Callisto, I-24020 Albino (BG) (IT); Magno, Giorgio, I-24030 Brembate di Sopra (BG) (IT)
(74) Representative: De Bortoli, Eros

(57) **Abstract**

An accessory device (1) for an electric switchgear (2), said accessory device being adapted to electrically connect first electric conductors (21) of said switchgear with second electric conductors (32) of an electronic device (3) to be installed in said switchgear, characterised in that it comprises:
- a main electronic board (10) adapted to be mechanically coupled with said electronic device, said main electronic board having opposite first and second interface surfaces (101, 102), said second interface surface (102) facing a corresponding interface surface (301) of said electronic device, when said main electronic board is mechanically coupled with said electronic device;
- first electric connectors (11) arranged on said first interface surface (101) according to a first connection layout, which is configured so that said first electric connectors match with said first electric conductors (21) and are coupleable with said first electric conductors;
- second electric connectors (12) arranged on said second interface surface (102) according to a second connection layout, which is configured so that said second electric connectors match with said second electric conductors (32) and are coupleable with said second electric conductors;
- first electronic means (13) electrically connected with said first and second electric connectors (11, 12), said first electronic means being adapted to transmit electric signals, which are provided by said first electric conductors (21), from one or more first electric connectors (11) of said accessory device to one or more corresponding second electric conductors (12) of said accessory device and to transmit electric signals, which are provided by said second electric conductors (32), from one or more second electric connectors (12) of said accessory device to one or more corresponding first electric connectors (11) of said accessory device.

## Description

The present invention regards an accessory device for low or medium voltage electric switchgears. The accessory device, according to the invention, is particularly suitable for retrofitting interventions in low or medium voltage electric switchgears.

Within the framework of the present invention the term "low voltage" relates to operating voltages lower than 1 kV AC and 1.5 kV DC while the term "medium voltage" relates to operating voltages higher than 1 kV AC and 1.5 kV DC up to some tens of kV, for example up to 72 kV AC and 100 kV DC.

As is known, electronic devices configured to provide supervision, control, protection, communication and/or monitoring functionalities are widely adopted in electric switchgears.

Such electronic devices, which are often defined as "IEDs" (Intelligent Electronic Devices), may comprise, for example, relays, protection units, sensor units, or the like.

Typically, IEDs are arranged in a LV cabinet of the switchgear and are normally mounted on a supporting wall, e.g. a cabinet door.

As is known, during their operating life, electric switchgears are often subject to retrofitting interventions, in which new components or devices are mounted on already existing installations.

Such retrofitting interventions often concern the new installation of an IED or the replacing of an existing IED (e.g. a relay) of the switchgear with a new one.

The experience has shown that these retrofitting interventions may be quite time-consuming as they often require to modify or re-design the cabling arrangements of the switchgear. In fact, the electric inputs/outputs of the IED to be installed may not match or be compatible with the existing wiring layout of the switchgear.

These interventions may therefore have a relevant impact on the overall maintenance and operation costs of the switchgear.

The main aim of the present invention is to provide an accessory device for a LV or MV electric switchgear, which allows overcoming the above-mentioned problems.

Within this aim, it is an object of the present invention to provide an accessory device, which is particularly suitable for retrofitting interventions in a LV or MV electric switchgear.

Another object of the present invention is to provide an accessory device ensuring high levels of flexibility in wiring an electronic device (e.g. a new IED) to be installed in an electric switchgear with the existing electric conductors of said switchgear without remarkable changes to the wiring layout.

Another object of the present invention is to provide an accessory device, which has a relatively simple structure with a relatively small size.

Another object of the present invention is to provide an accessory device, which can be industrially manufactured at competitive costs.

In order to achieve the above aim and objects, the present invention provides an accessory device for an electric switchgear, according to the following claim 1 and related dependent claims.

A further aspect of the invention relates to an electric switchgear, according to the following claim 11.

Characteristics and advantages of the invention will emerge from the description of preferred, but not exclusive, embodiments of the accessory device, according to the invention, nonlimiting examples of which are provided in the attached drawings, wherein:
- Figures 1-5 show schematic partial views of an embodiment of the accessory device, according to the invention;
- Figures 6-8 show schematic partial views of a further embodiment of the accessory device, according to the invention;
- Figure 9-13 show schematic partial views of variant embodiments of the accessory device, according to the invention.

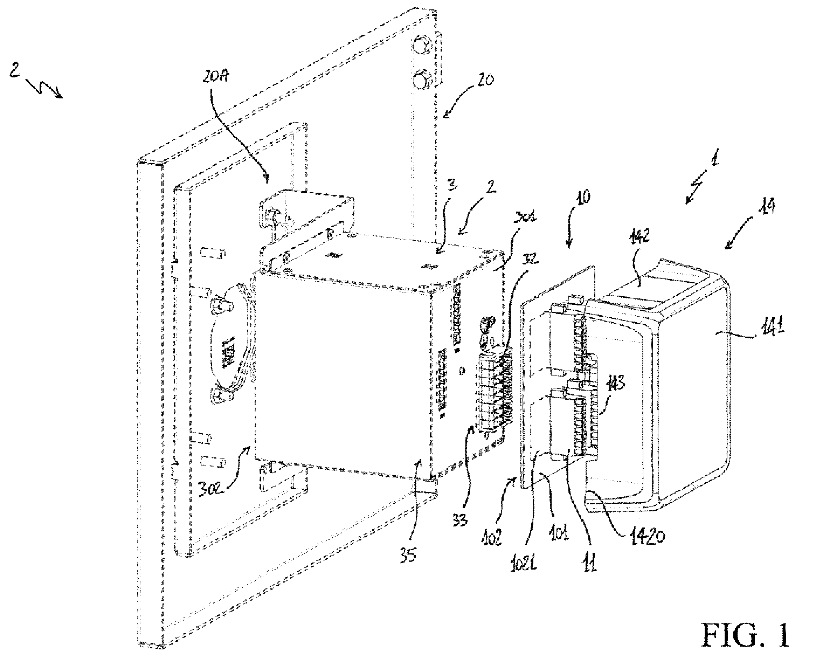

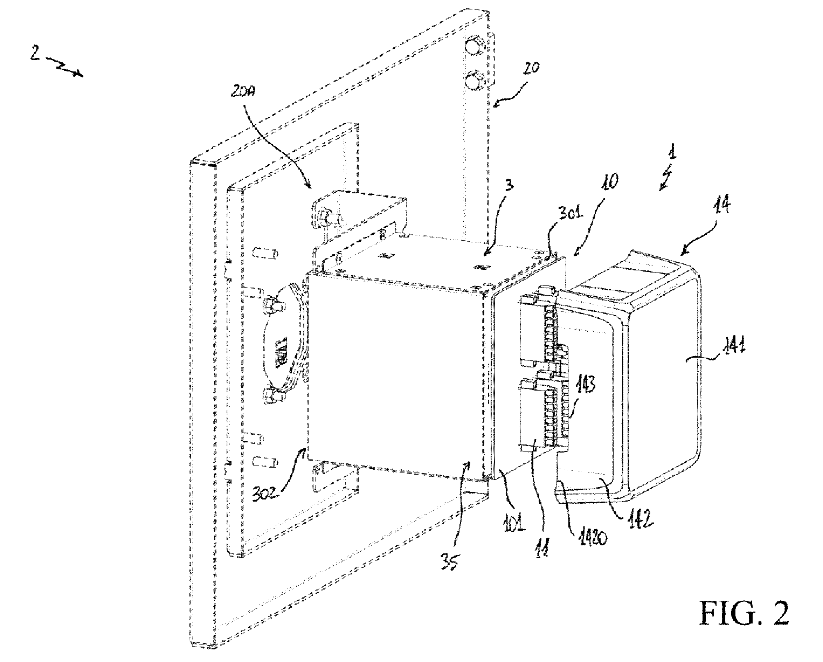

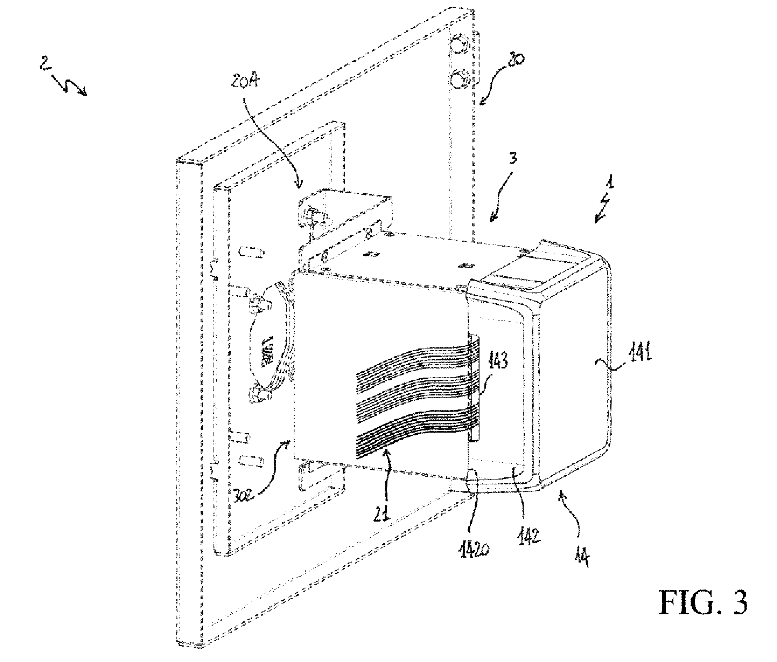

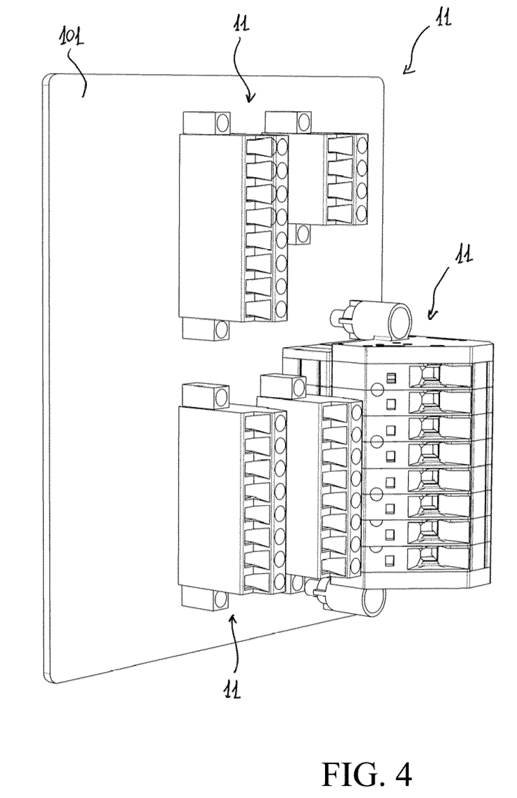

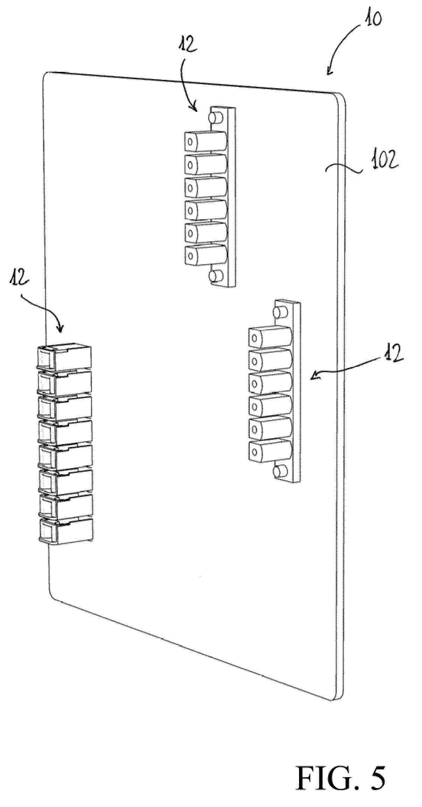

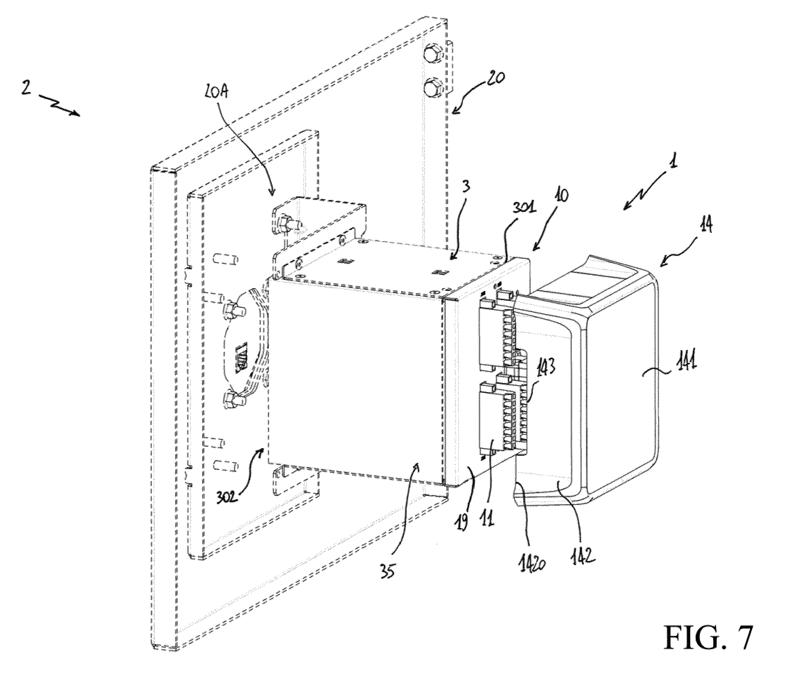

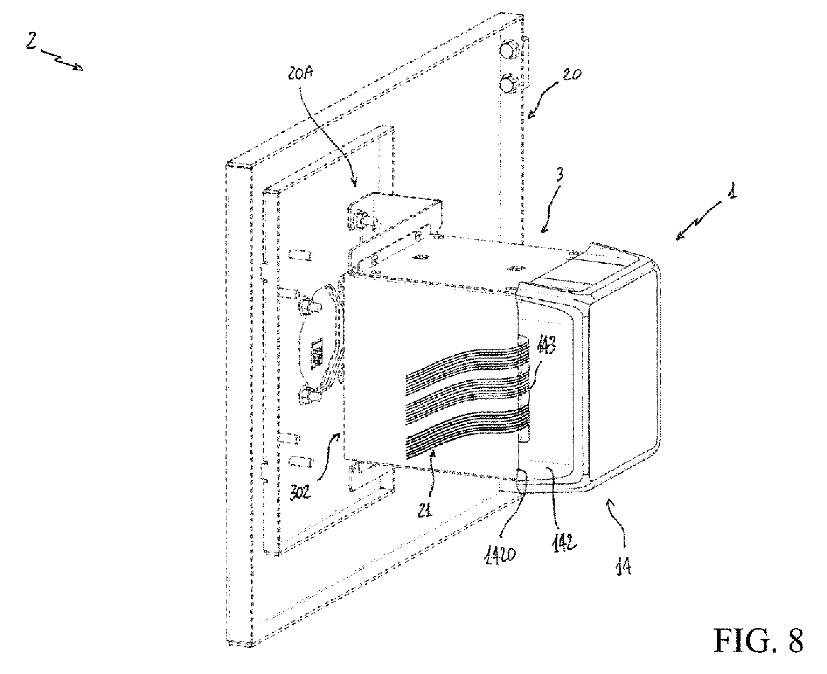

With reference to the mentioned figures, the present invention relates to an accessory device 1 for retrofitting interventions in a LV or MV electric switchgear 2 (only partially shown in the cited figures 1-8).

As it will emerge from the following, the accessory device 1 is particularly adapted for retrofitting interventions in an electric switchgear, more particularly in a LV cabinet thereof.

In general, the accessory device 1 is adapted to electrically connect first electric conductors 21 of the switchgear 2 with second electric conductors 32 of an electronic device 3 to be installed in said switchgear.

The first electric conductors 21 are generally arranged according to a given layout, which depends on the installation requirements of the switchgear. They may be, for example, data lines, control lines and/or power lines of a LV cabinet of the switchgear.

The electronic device 3 may be any IED suitable for use in LV or MV switchgears, e.g. a relay, a protection unit, a sensor unit, or the like.

Preferably, the electronic device 3 is adapted to be installed on a wall 20 of the switchgear, more particularly of the LV cabinet thereof. As an example, in the embodiments shown in figures 1-8, the electronic device 3 is installed on the LV cabinet door 20 of the switchgear 2.

Preferably, the electronic device 3 comprises a mounting surface 302, at which it may fixed to a wall 20 of the switchgear by suitable fixing means 20A, which may be of known type (e.g. screws, pins, plates, or the like).

The second electric conductors 32 are generally arranged according to a given layout, which depends on the constructive requirements of the electronic device 3. They may be, for example, data lines, control lines and/or power lines internal to said electronic device.

Preferably, the electronic device 3 comprises a interface surface 301, at which electric connectors 33 of said electronic device are arranged to be electrically connected with the second electric conductors 32.

Preferably, when the electronic device 3 is adapted to be installed on a wall 20 of the switchgear 2, the interface surface 301 is in a distal opposite position with respect to the mounting surface 302.

According to the invention, the accessory device 1 comprises a main electronic board 10 adapted to be mechanically coupled with the electronic device 3 at the interface surface 301 of this latter.

Preferably, the main electronic board 10 is a PCB (Printed Circuit Board) having a nonconductive substrate adapted to mechanically support electronic components mounted thereon and having conductive tracks, pads, vias, et cetera arranged on or passing through said substrate to electrically connect said electronic components at one or both sides thereof.

Preferably, the main electronic board 10 can be removably fixed to the electronic device 3 by suitable fixing means (not shown), which may be of known type (e.g. screws, pins, snap-fit connectors, rails, tracks, or the like).

The main electronic board 10 has a first and second interface surfaces 101, 102.

The second interface surface 102 faces the corresponding interface surface 301 of the electronic device 3 and therefore is in proximal position with respect to the electronic device 3, when the main electronic 10 board is mechanically coupled with the electronic device 3.

The first interface surface 101 is opposite to the second interface surface 102 and therefore is in distal position with respect to the electronic device 3, when the main electronic board 10 is mechanically coupled with the electronic device 3.

Preferably, when the main electronic board 10 is a PCB, the interface surfaces 101, 102 form corresponding opposite sides of the substrate of such PCB.

According to the invention, the accessory device 1 comprises first electric connectors 11 arranged on the first interface surface 101 of the main electronic board 10 according to a first connection layout, which is configured in such a way that the first electric connectors 11 match and can be coupled with the first electric conductors 21 of the switchgear 2.

The first electric connectors 11 are in practice arranged according to a layout compatible with the wiring layout of the first electric conductors 21.

According to the invention, the accessory device 1 comprises second electric connectors 12 arranged on the second interface surface 102 of the main electronic board 10 according to a second connection layout, which is configured in such a way that the second electric connectors 12 match and can be coupled with the second electric conductors 32 of the electronic device 3.

The second electric connectors 12 are in practice arranged according to a layout compatible with the wiring layout of the second electric conductors 32.

Preferably, the second electric connectors 12 of the accessory device are arranged in such a way to be directly coupled with corresponding third electric connectors 33 of the electronic device 3 (arranged on the interface surface 301 of this latter), when the main electronic board 10 is mechanically coupled with the electronic device 3.

In general, the first and second electric connectors 11, 12 may be of any known type, according to the needs.

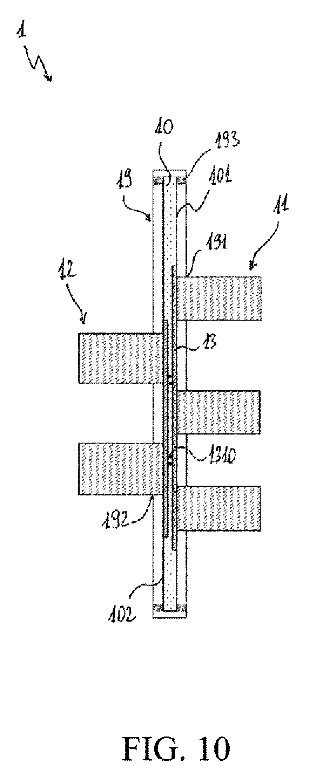

As an example, they may be male-ended or female-ended connectors, such as plugs or jacks. As a further example, they may be formed by single elements arranged on the interface surfaces 101, 102 of the electronic board 10 or be part of electric terminal blocks or boxes arranged on the interface surfaces 101, 102 of the electronic board 10 (as shown in figures 1-10).

In general, any number of first and second electric connectors 11, 12 may be arranged on the respective interface surfaces 101, 102 of the electronic board 10, according to the needs.

Preferably, a same number of first and second electric connectors 11, 12 is arranged on the respective interface surfaces 101, 102, so as to have a one-to-one physical correspondence between the electric connectors 11, 12 of the accessory device.

According to the invention, the accessory device 1 comprises first electronic means 13 (which may be of digital and/or analogue type) electrically connected with the first and second electric connectors 11, 12.

The first electronic means 13 are adapted to route electric signals, which are provided by the first electric conductors 21 of the switchgear, from one or more first electric connectors 11 to one or more corresponding second electric conductors 12 of the accessory device.

The first electronic means 13 are also adapted to route electric signals, which are provided by the second electric conductors 32 of the electronic device 3, from one or more second electric connectors 12 to one or more corresponding first electric connectors 11 of the accessory device.

In general, the first electronic means 13 are adapted to route electric signals between M first electric connectors 11 and N second electric connectors 12 of the accessory device, where M, N are integer numbers with N, M >= 1.

Preferably, the first electronic means 13 are adapted to route electric signals between a same number of first and second electric connectors 11, 12 of the accessory device so as to have a one-to-one functional correspondence between these latter.

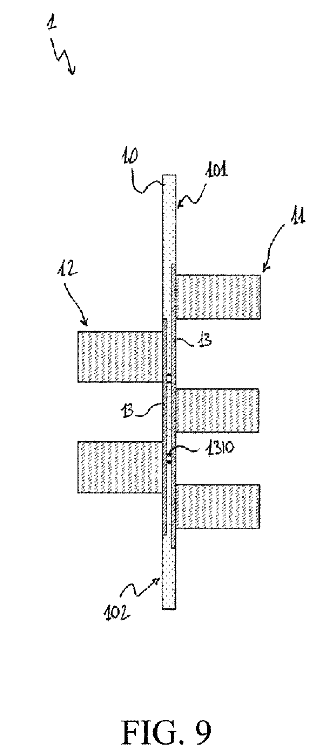

According to some embodiments of the invention (figures 9-10), the first electronic means 13 comprise electronic routing circuits arranged on both the interface surfaces 101, 102 of the electric board 10 for coupling with the corresponding connectors 11, 12 and mutually connected by means of suitable electric connections 1310, which may be of known type (e.g. connecting vias).

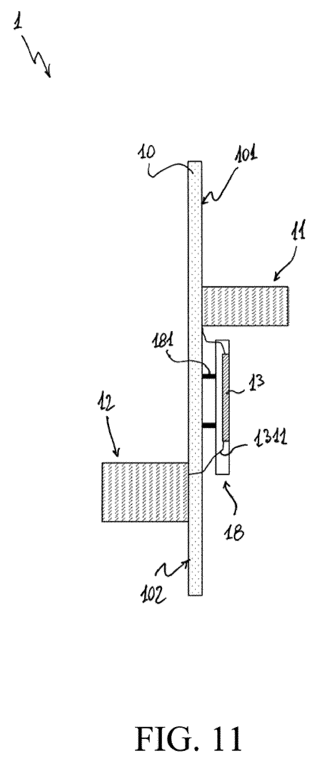

According to other embodiments of the invention (figure 11), the first electronic means 13 comprise electronic routing circuits arranged on an auxiliary electronic board 18 (e.g. a PCB) fixed to the main electronic board 10 by means of suitable fixing means 181, which may be of known type (e.g. fixing pins). Said routing circuits may be connected with the electric connectors 11, 12 by means of suitable electric connections 1311, which may be of known type (e.g. connecting wires or tracks).

Other variant solutions to arrange the first electronic means 13 on the main electric board 10 are however possible, according to the needs.

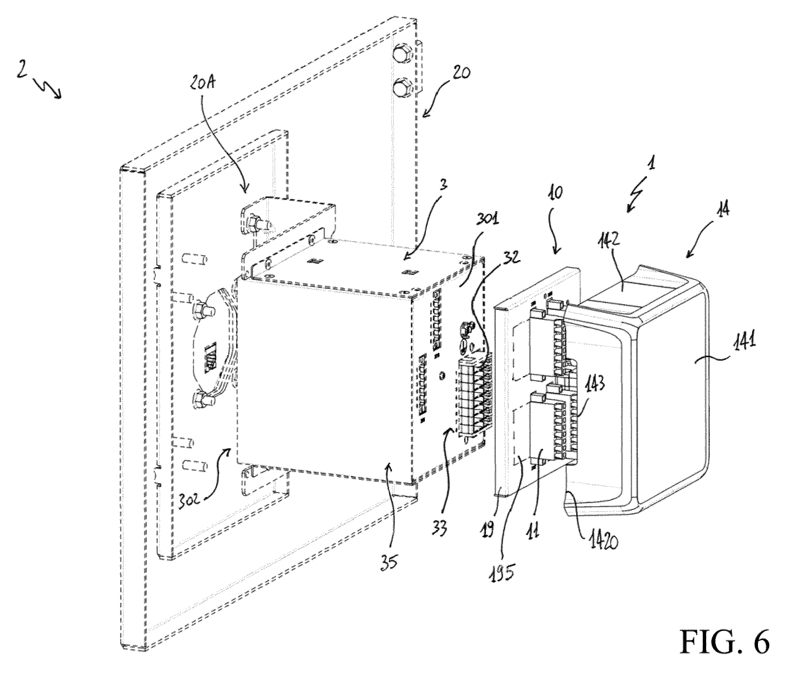

According to some embodiments of the invention (figures 6-8, 10), the accessory device 1 comprises a shielding enclosure 19 that defines an internal volume in which the main electric board 10 is positioned.

Preferably, the shielding enclosure 19 is arranged to completely surround the main electronic board 10 and comprises first and second shaped windows 191, 192 to allow the first and second connectors 11, 12 of the accessory device 1 to protrude externally.

The main electronic board 10 is preferably fixed to the external shielding enclosure 19 by means of suitable fixing means 193, which may be of known type (e.g. fixing clamp elements). In turn, the shielding enclosure 19 may be removably fixed to the electronic device 3 by suitable fixing means (not shown), which may be of known type (e.g. screws, pins, snap-fit connectors, or the like).

Other variant solutions are however possible, according to the needs.

The shielding enclosure 19 allows obtaining an effective electric shielding of the electronic circuits arranged on the main electronic board 10. This is particularly advantageous as it provides mechanical protection for the main electronic board 10 during wiring operations and an electromagnetic shield for the electronic components of the main electronic board 10.

According to some embodiments of the invention, the accessory device 1 comprises a protective lid 14 adapted to be mechanically coupled with the electronic device 3 to define an internal volume in which the other internal components 10, 11, 12, 19 of the accessory device are included when the main electronic board 10 is mechanically coupled with the electronic device 3.

Preferably, the protective lid 14 is fixed to the electronic device 3 at suitable coupling portions 35 of this latter, which are advantageously positioned in proximity of the interface surface 301.

Suitable fixing means (not shown), which may be of known type (e.g. screws, pins, snap-fit connectors, rails, or the like) may be used to fix to the protective lid 14 to the coupling portions 35 of the electronic device 3.

Preferably, the protective lid 14 is shaped so as to be easily mountable on the electronic device 3 and completely surround the internal components 10, 11, 12, 19 of the accessory device, the coupling portions 35 of the electronic device 3 and the interface surface of the electronic device 3, when it is mechanically coupled to the electronic device 3.

Preferably, the protective lid 14 comprises a front wall 141, which is arranged in such a way to be in a distal position with respect to electronic device 3, when the protective lid 14 is mechanically coupled to this latter.

One or both sides of the front wall 141 may be used to form first labelling surface portions, on which information labels can be positioned and attached. Said information labels may report data related to the installation or configuration of the electronic device 3, routing tables, and the like.

Preferably, the protective lid 14 comprises side walls 142, which are arranged in such a way to protrude from the front wall 141 towards the electronic device 3 to overlap the coupling portions 35 of this latter, when the protective lid 14 is mechanically coupled to the electronic device 3.

Preferably, the protective lid 14 comprises an opening 143, through which the first electric conductors 21 of the switchgear can pass when they are coupled with the first electric connectors 11 of the accessory device and when the protective lid 14 is mechanically coupled to the electronic device 3.

Preferably, the opening 143 of the protective lid 14 is a recess positioned at an edge 1420 of a side wall 142 in a distal position with respect to the front wall 141.

This solution remarkably simplifies the mounting of the protective lid 14 even if the first electric connectors 11 of the switchgear are coupled with the first electric connectors 11 of the accessory device.

Further, this solution allows reducing the overall volume occupied the accessory device and by the first electric conductors 21 of the switchgear.

According to some embodiments of the invention, the accessory device 1 comprises second electronic means 17 (which may be of digital and/or analogue type) to process electric signals in transit between the first and second connectors 11, 12.

Preferably, the electronic means 17 are configured to perform signal conditioning processes of the electric signals in transit between the first and second connectors 11, 12. As an example, the electronic means 17 may be configured to modify the level or intensity of the electric signals transmitted from the first connectors 11 to the second connectors 11, 12 to make them suitable for input in the electronic device 3.

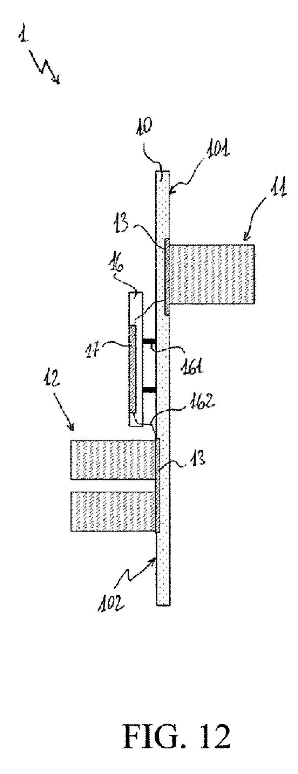

As shown in figure 12, the second electronic means 17 preferably comprise electronic processing circuits arranged on a further electronic board 16 (e.g. a PCB) fixed to the main electronic board 10 by means of suitable fixing means 161, which may be of known type (e.g. fixing pins) and electrically connected with the first electric means 13 by means of suitable electric connections 162, which may be of known type (e.g. connecting wires or tracks)

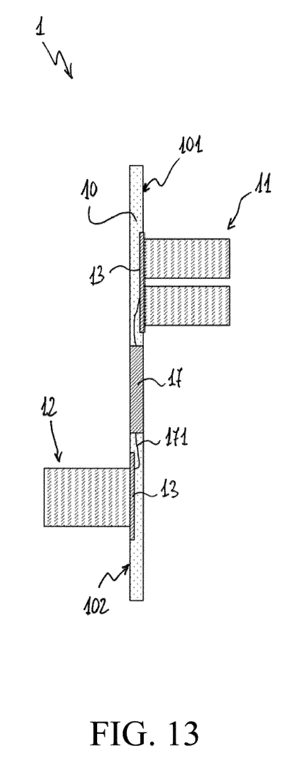

According to variant embodiments of the invention (figure 13), the second electronic means 14 may comprise electronic processing circuits arranged on the electric board 10 and electrically connected with the first electronic means 13 by means of suitable electric connections 171, which may be of known type.

Other variant solutions to arrange the second electronic means 16 on the main electric board 10 are however possible, according to the needs.

According to some embodiments of the invention, the accessory device 1 comprises one or more second labelling surface portions 1021, 195, on which wiring labels can be positioned and attached.

Said wiring labels may report data related to at least the wiring of connectors 11 of the main electronic board 10.

Preferably, the labelling surface portions 1021, 195 are positioned at the interface surface 101 of the main electronic board 10 in proximity of the first connectors 11 (figure 1) or at the external surface of the shielding enclosure 19 in proximity of the first openings 191, from which the first connectors 11 protrude externally (figure 6).

The arrangement of the labelling surface portions 1021, 195 to attach the corresponding suitable wiring labels allows remarkably simplifying the electrical connections of the first electric conductors 21 of the switchgear with the first electric connectors 11 of the accessory device.

The accessory device 1 provides remarkable advantages in installing an electronic device 3 in a switchgear 2, namely in a LV cabinet thereof.

The accessory device 1 ensures a high level of flexibility in electrically connecting electrical conductors of the switchgear with the electronic device 3.

The accessory device 1 can be suitably customized in accordance of the installation needs, as the first electronic means 13 and the second electronic means 17 can be suitably designed to overcome any matching or compatibility problems between the electronic device 3 and the wiring layout of the switchgear.

The accessory device 1 provides a remarkable simplification of the wiring operations needed to electrically connect the electronic device 3 with the first electric conductors 21 of the switchgear. This allows reducing time and costs for installation of the electronic device 3.

The accessory device 1 is particularly suitable for simplifying retrofitting interventions in a switchgear, which provides for the installations of new electronic devices (e.g. relays or other IEDs) or the substitution of existing electronic devices with new ones.

Thanks to the accessory device 1, changes to the electrical schemes of the switchgear are not needed in case of retrofitting interventions as the labelling surface portions 1021, 195 can be arranged to report for the connectors 11 the identification data used by the old electronic device to be replaced for connection with the first electric conductors 21 of the switchgear.

The accessory device 1 can be easily integrated with the structure of an electronic device due to its simple structure and small size.

The accessory device 1 is of relatively easy and cheap realization at industrial level.

## Claims

1. An accessory device (1) for an electric switchgear (2), said accessory device being adapted to electrically connect first electric conductors (21) of said switchgear with second electric conductors (32) of an electronic device (3) to be installed in said switchgear, **characterised in that** it comprises:
- a main electronic board (10) adapted to be mechanically coupled with said electronic device, said main electronic board having opposite first and second interface surfaces (101, 102), said second interface surface (102) facing a corresponding interface surface (301) of said electronic device, when said main electronic board is mechanically coupled with said electronic device;
- first electric connectors (11) arranged on said first interface surface (101) according to a first connection layout, which is configured so that said first electric connectors match with said first electric conductors (21) and are coupleable with said first electric conductors;
- second electric connectors (12) arranged on said second interface surface (102) according to a second connection layout, which is configured so that said second electric connectors match with said second electric conductors (32) and are coupleable with said second electric conductors;
- first electronic means (13) electrically connected with said first and second electric connectors (11, 12), said first electronic means being adapted to transmit electric signals, which are provided by said first electric conductors (21), from one or more first electric connectors (11) of said accessory device to one or more corresponding second electric conductors (12) of said accessory device and to transmit electric signals, which are provided by said second electric conductors (32), from one or more second electric connectors (12) of said accessory device to one or more corresponding first electric connectors (11) of said accessory device.

2. An accessory device, according to claim 1, **characterised in that** said second electric connectors (12) are coupled with corresponding third electric connectors (33) of said electronic device, when said main electronic board (10) is mechanically coupled with said electronic device (3).

3. An accessory device, according to one or more of the previous claims, **characterised in that** it comprises a shielding enclosure (19) defining an internal volume in which said main electronic board (10) is accommodated, said shielding enclosure being configured to surround said main electronic board and having first and second windows (191, 192) to allow said first and second connectors (11, 12) to protrude externally.

4. An accessory device, according to claim 3, **characterised in that** said shielding enclosure (19) is made of a metal material.

5. An accessory device, according to one or more of the previous claims, **characterised in that** it comprises a protective lid (14) adapted to be mechanically coupled with said electronic device (3) to define an internal volume, in which internal components (10, 11, 12, 19) of said accessory device are accommodated when said main electronic board (10) is mechanically coupled with said electronic device.

6. An accessory device, according to claim 5, **characterised in that** said protective lid (14) comprises an opening (143), through which said first electric conductors (21) can pass, when said first electric conductors are coupled with said first electric connectors (11) and said protective lid is mechanically coupled with said electronic device (3).

7. An accessory device, according to claim 6, **characterised in that** said opening (143) is a shaped recess at an edge (1420) of a lateral wall (142) of said protective lid.

8. An accessory device, according to one or more of the previous claims, **characterised in that** it comprises second electronic means (17) to process electric signals in transit between said first and second connectors (11, 12).

9. An accessory device, according to claim 8, **characterised in that** said second electronic means (17) comprise processing circuits arranged on a further electronic board (16) of said accessory device, said further electronic board being fixed to said main electronic board (10).

10. An accessory device, according to one or more of the previous claims, **characterised in that** it comprises one or more labelling surface portions (1021, 195), at which one or more wiring labels can be attached.

11. An electric switchgear (2) **characterised in that** it comprises an electronic device (3) electrically connected with first electric conductors (21) of said switchgear by means of an accessory device (1), according to one or more of the previous claims.
